# FASCICULE DE BREVET EUROPEEN

(11) **EP 1 753 998 B1**
(45) Date de publication et mention de la délivrance du brevet: **19.03.2014**
(21) Numéro de dépôt: 05752664.2
(22) Date de dépôt: 09.06.2005
(51) Int. Cl.: F23C 10/10, C10J 3/56

(54) **PROCEDE DE CONVERSION ENERGETIQUE MINIMISANT LA CONSOMMATION D'OXYGENE**
VERFAHREN ZUR ENERGIEUMWANDLUNG UNTER MINIMIERUNG VON SAUERSTOFFVERBRAUCH
METHOD FOR ENERGY CONVERSION MINIMIZING OXYGEN CONSUMPTION

(30) Priorité: 11.06.2004 FR 0451263
(43) Date de publication de la demande: 21.02.2007
(73) Titulaire: Alstom Technology Ltd, 5401 Baden (CH)
(72) Inventeur: MORIN, Jean-Xavier, F-45170 Neuville Aux Bois (FR); BEAL, Corinne, F-78960 Voisins Le Bretonneux (FR)
(86) Numéro de dépôt international: PCT/EP2005/052680
(87) Numéro de publication internationale: WO 2005/124232

(56) Documents cités:
- EP-A- 0 406 185
- DE-A1- 4 308 103
- GB-A- 1 084 977
- US-A- 3 969 089
- US-A- 4 469 050
- US-A- 4 616 576
- US-A- 4 683 840
- US-A- 4 854 249
- US-A- 5 987 874
- US-B1- 6 494 153

## Description

La présente invention concerne un procédé de conversion énergétique de combustibles solides contenant du carbone.

Les émissions des gaz à effet de serre, notamment le CO₂, doivent de plus en plus être maîtrisées dans les centrales de production d'énergie utilisant des combustibles fossiles. Le contrôle de ces émissions amène à résoudre des problèmes nouveaux comme la capture du CO₂ dans les fumées des centrales ou dans celles utilisant des combustibles fossiles ou dans les gaz issus d'installations utilisant des énergies renouvelables de type biomasse (carbone non fossile) pour la production de carburants de substitution utilisables dans les transports, tout ceci en minimisant à la fois les coûts et les modifications des installations existantes.

Enfin, la raréfaction progressive des gisements pétroliers crée une dynamique pour mettre en oeuvre à grande échelle des techniques de récupération assistées par injection de CO₂ capables de doubler la possibilité d'extraction des réserves accessibles.

A cet effet, il est connu de convertir par gazéification autothermique à l'oxygène et à la vapeur d'eau des combustibles solides contenant des matières carbonées afin de produire un gaz de synthèse contenant du CO et du H₂ pouvant être utilisés dans des turbines à gaz, des unités de production d'hydrogène ou des unités de synthèse de composés type méthanol.

Ce type d'installation est décrit dans les brevets FR 2 660 415 et FR 2 559 776 du demandeur. Cependant, la présence d'hydrocarbures non convertis de type goudrons ou de fines particules de carbone imbrûlé dans ces installations, créent des condensations et de composants indésirables dans les systèmes de refroidissement et de traitement des gaz de synthèse et dégradent le rendement desdites installations.

Afin d'éliminer ces goudrons et ce carbone imbrûlé, on procède à un reformage thermique de ce gaz de synthèse par élévation de température provenant d'une combustion partielle, ce qui nécessite un appoint d'oxygène secondaire.

Comme décrit dans le brevet US 6 505 567 du demandeur, il est également possible de convertir énergétiquement ces combustibles solides par des procédés de combustion à l'oxygène et au CO₂ recyclé et non pas avec de l'air extérieur, ce qui produit des fumées de combustion contenant principalement du CO₂ et de la vapeur d'eau, sans azote, afin de pouvoir utiliser ces fumées pour des opérations de récupération assistée du pétrole dans les sous-sols, ou de pouvoir les séquestrer en sous-sol. Cependant, ces procédés consomment beaucoup d'oxygène qui doit être produit par une unité spécifique de distillation d'air utilisant une partie de l'énergie produite et donc pénalisante en énergie électrique consommée.

Il est également connu de convertir par des procédés de combustion en cycle thermochimique des combustibles solides contenant des matières carbonées pour produire des fumées de combustion contenant principalement du CO₂ et de l'eau. Dans cette solution, il n'est pas nécessaire de recourir à une unité spécifique de distillation d'air, mais le problème vient de la présence de composés carbonés non convertis présents dans les fumées de combustion, comme des hydrocarbures (CₙHₙ) ou de carbone imbrûlé qui ne sont pas acceptables pour les procédés de récupération assistée de pétrole ou pour un stockage géologique et doivent être éliminés. Un tel procédé de combustion en boucle chimique est décrit par le document US 6494153.

L'objet de la présente invention est de proposer, un procédé de conversion énergétique qui minimise la consommation d'oxygène et minimise la production de composés carbonés non convertis.

Le procédé selon l'invention est un procédé selon l'objet de la revendication 1.

La deuxième étape décrite dans l'objet de la revendication 1 permet de convertir quasi totalement les hydrocarbures résiduels contenus dans les gaz issus de la première étape en CO₂, CO, H₂ et en vapeur d'eau dans le cas d'une gazéification en première étape et en CO₂ et en vapeur d'eau dans le cas d'une combustion en première étape.

Selon l'invention, des oxydes métalliques circulent entre deux lits circulants interconnectés de conversion du combustible et d'oxydation des oxydes. Les oxydes métalliques permettent l'apport d'oxygène nécessaire à la conversion du carbone et de l'hydrogène contenus dans le combustible introduit dans le réacteur de conversion.

Selon une première variante du procédé, la conversion énergétique du combustible est une combustion. Si la quantité d'oxygène entrant dans le réacteur de conversion est supérieure à la stoechiométrie réactionnelle, la réaction de conversion sera une combustion quasi totale, à l'exception des composés carbonés non convertis.

Selon une disposition particulière de la première variante, l'injection d'oxygène de la deuxième étape du procédé est faite dans le cyclone de séparation gaz- solides du lit fluidisé. Ce cyclone est le siège d'une turbulence intense où s'effectue la séparation des fumées et des solides circulants avec un certain temps de séjour dans ledit cyclone. Il est donc avantageux d'y introduire de l'oxygène de la deuxième étape de conversion qui va se combiner avec les composés carbonés non convertis présents dans les fumées de combustion comme les hydrocarbures (CₙHₘ) ou de carbone imbrûlé.

Selon une première disposition de la première variante, l'injection d'oxygène est faite dans la partie supérieure de la gaine d'entrée du cyclone. Ceci présente l'avantage d'injecter cet oxygène dans la phase gazeuse de l'écoulement où se trouvent les composés à convertir, sachant que les solides transitent en partie basse de cette gaine, et ainsi procurer un temps de séjour additionnel pour la réaction de conversion dans la gaine.

Selon une deuxième disposition de la première variante, l'injection d'oxygène est faite dans le plafond du cyclone. Ceci offre l'avantage d'une injection qui va développer un jet quasi coaxial avec l'axe du cyclone sans risque d'impacts sur les parois.

Selon une troisième disposition de la première variante l'injection d'oxygène est faite à la sortie du cyclone. Cette disposition permet une injection dans une phase gazeuse très peu chargée de solides et dont la rotation résiduelle due à la mise en centrifugation est bien adaptée à un mélange gazeux avec de l'oxygène.

Selon une deuxième variante, la conversion énergétique du combustible est une gazéification. Si la quantité d'oxygène est peu importante dans le réacteur de conversion, soit si elle est réduite vis à vis de la stoechiométrie réactionnelle, la réaction sera une gazéification partielle.

Selon une caractéristique particulière de la deuxième variante, la gazéification primaire est faite en cycle thermochimique. Le cycle thermochimique est fait par échange d'oxydes métalliques entre deux lits fluidisés circulants interconnectés. Ce cycle permet la production ultérieure d'hydrogène purifié.

Selon une première disposition de la deuxième variante l'injection d'oxygène de la deuxième étape est faite par le plafond dans le réacteur cyclone à flux gazeux vertical descendant.

Selon une deuxième disposition de la deuxième variante l'injection d'oxygène est faite sensiblement au centre du réacteur cyclone à flux gazeux vertical descendant. Ce qui permet une injection qui va développer un jet quasi coaxial avec l'axe du cyclone sans risque d'impacts avec les parois et l'injection va se faire où la rotation résiduelle du gaz à convertir issu de la première étape (mise en centrifugation) est bien adaptée à un mélange gazeux avec oxygène.

Selon une autre variante de l'invention, le procédé comprend deux voies parallèles de réaction desdits combustibles dans deux réacteurs de conversion énergétique avec une deuxième étape d'injection d'oxygène à la sortie desdits réacteurs et qu'un réacteur d'oxydation d'oxydes alimente simultanément et de façon contrôlée en particules d'oxydes métalliques le réacteur et le gazéifieur primaire.

L'invention sera mieux comprise à la lecture de la description qui va suivre donnée uniquement à titre d'exemple et faite en se référant aux dessins annexés dans lesquels :
- la figure 1 est une vue générale d'un dispositif de conversion totale ou combustion selon l'invention,
- la figure 2 est une vue générale d'un dispositif de conversion partielle ou gazéification selon l'invention,
- la figure 3 est une vue générale d'un dispositif de coproduction d'électricité et d'hydrogène.

Pour simplifier on utilisera les mêmes références pour les mêmes éléments sur des différentes figures.

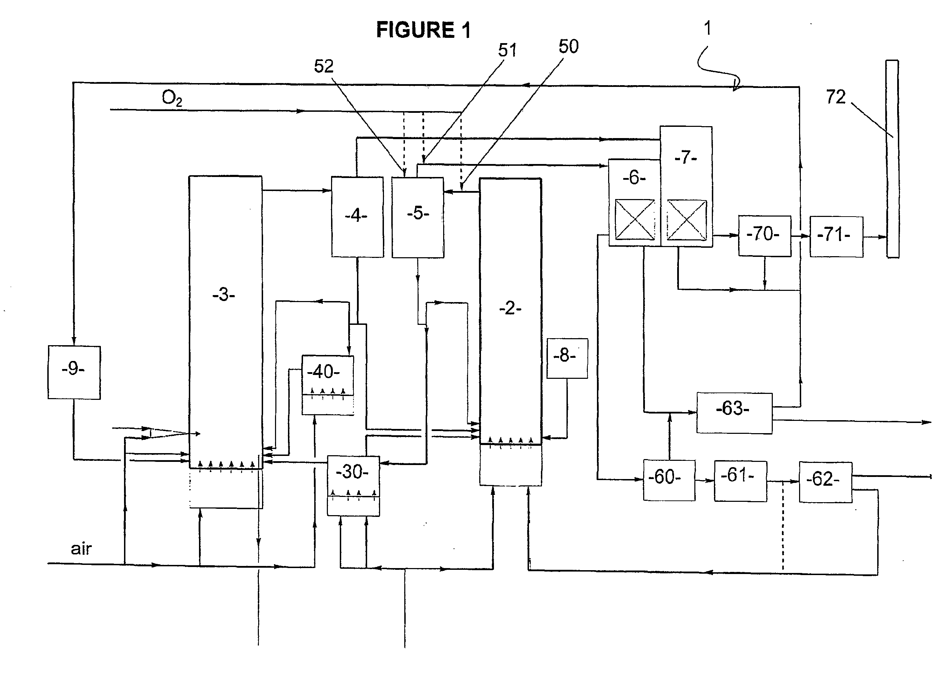

L'installation de combustion 1 représentée à la figure 1 comprend un réacteur de réduction d'oxydes 2 et un réacteur d'oxydation d'oxydes 3, deux cyclones 4 et 5 chacun étant dédié à un réacteur, deux cages arrières 6 et 7 contenant des échangeurs de récupération sur fumées à base de CO₂ et sur air, chacune dédié à un des réacteurs. Un filtre à manches 70, un ventilateur de tirage 71 et une cheminée 72 sont placés après la passe arrière 7. Un séparateur des cendres et des oxydes 63 est disposé après la passe arrière 6 pour traiter les solides, tandis qu'un filtre à manche 60, un ventilateur de tirage 61 et un circuit de refroidissement et de condensation 62 pour prétraiter le CO₂. Les réacteurs 2 et 3 sont interconnectés pour assurer l'échange des particules d'oxydes.

Le réacteur de réduction 2 est alimenté en combustible à partir d'un silo 8 et par le lit 30. Tandis que le réacteur 3 est alimenté par un silo 9 et par deux lits fluidisés circulants 40 et 30.

Le réacteur 2 est fluidisé avec un mélange composé de vapeur d'eau et de CO₂ recyclé.

Les oxydes après réduction dans le réacteur 2 passent dans le cyclone 5 où les particules solides d'oxydes sont séparées des cendres volantes et des gaz de combustion constitués de CO₂, SO₂ et de vapeur d'eau. L'oxygène de la deuxième étape du procédé est introduit en amont, dans et/ou en aval du cyclone 5 par des conduits respectifs 50, 51 et 52. Ces trois injections séparées peuvent être effectuées seules ou en combinaison pour assurer la conversion totale des composés non convertis contenus dans les fumées à base de CO₂ issues du réacteur 2.

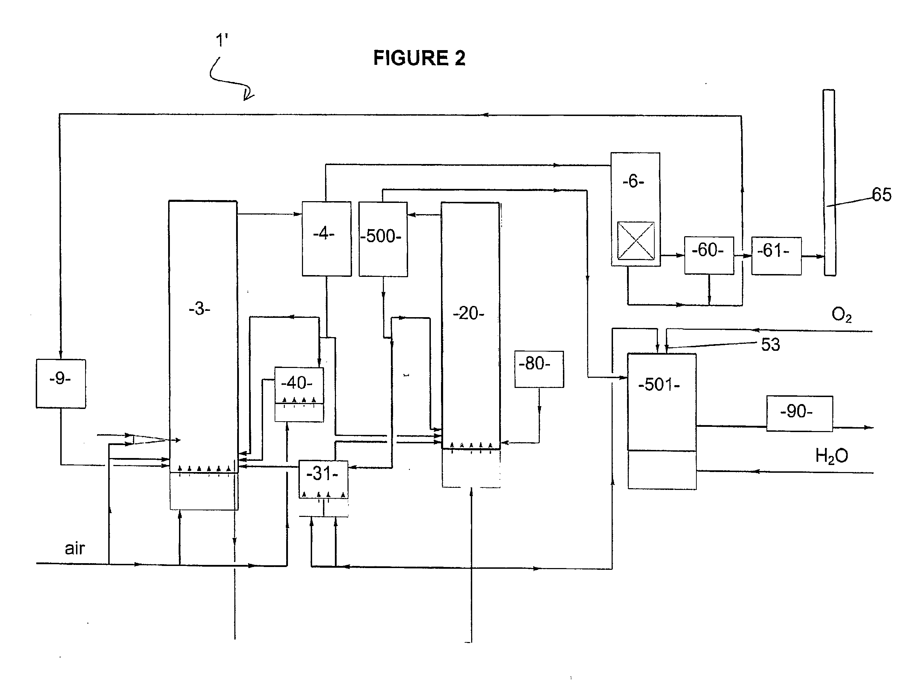

Dans l'installation de gazéification partielle 1' présentée à la figure 2, on trouve pour la première étape du procédé un gazéifieur primaire 20 ou réacteur cyclone et un réacteur d'oxydation d'oxydes 3, deux cyclones 4 et 500 le premier 4 est relié au réacteur 3 et le deuxième 500 au gazéifieur 20, une cage arrière 6 en série avec le cyclone 4 du réacteur 3 contenant des échangeurs de récupération sur gaz de synthèse et sur air. Un filtre à manche 60, un ventilateur de tirage 61 et une cheminée 65 sont placés après la passe arrière 6. Le gaz de synthèse brut extrait du cyclone 500 sont dirigées vers un gazéifieur secondaire 501 où est effectué l'injection d'oxygène de la deuxième étape du procédé assurant ainsi l'élimination des goudrons et du carbone imbrûlé par reformage thermique de ce gaz de synthèse en 90, c'est à dire par élévation de la température provenant d'une combustion partielle.

Le gazéifieur primaire 20 est alimenté par un silo 80 en biomasse par exemple et par le lit 31.

L'oxyde utilisé dans le réacteur 3 est, par exemple, un oxyde métallique. L'oxygène de la deuxième étape du procédé est injecté dans le gazéifieur secondaire 501 par un conduit 53 afin d'éliminer ces goudrons et ce carbone imbrûlé par reformage thermique de ce gaz de synthèse.

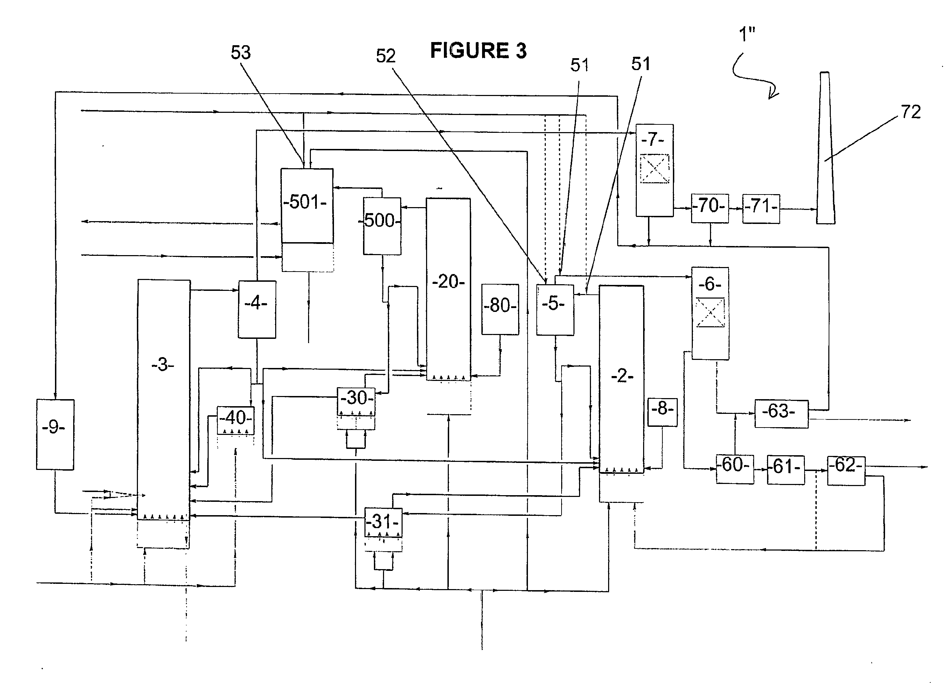

Le dispositif 1" représenté à la figure 3 comprend un réacteur de réduction d'oxydes 2, un réacteur d'oxydation d'oxydes 3 et un gazéifieur primaire 20, trois cyclones 4, 5 et 500 reliés respectivement aux réacteurs 3 et 2 et au gazéifieur primaire 20. Le cyclone 500 est relié à un gazéifieur secondaire 501.

Le réacteur 2 est alimenté par un silo 8 et le lit fluidisé 30, tandis que le réacteur 3 est alimenté par un silo 9 et les lits fluidisés circulants 40, 30 et 31, et le gazéifieur 20 par le silo 80 et le lit 31.

L'oxygène de la deuxième étape du procédé arrive dans le cyclone 5 par les conduits 50, 51 ou 52 disposés respectivement à l'entrée, dans le cyclone 5 ou à la sortie de celui-ci. L'oxygène arrive également dans le gazéifieur secondaire 501 par un conduit 53. Dans cette configuration de coproduction d'hydrogène en 90 et d'électricité, le réacteur d'oxydation d'oxydes 3 alimente de façon contrôlée et simultanément en particules d'oxydes métalliques le réacteur 2 de combustion avec un excédent vis à vis de la stoechiométrie en oxygène, et le gazéifieur primaire 20 avec un déficit vis à vis de la stoechiométrie en oxygène. Les localisations des injections d'oxygène, constituant la deuxième étape du procédé, sont analogues à celles des figures 1 et 2.

## Revendications

1. Procédé de conversion énergétique de combustibles solides contenant notamment du carbone comprenant une première étape de réaction desdits combustibles dans au moins un réacteur de conversion énergétique (2, 20), la réaction de ladite première étape étant faite dans un premier lit fluidisé circulant (2, 20) avec des oxydes métalliques pour conversion du combustible, lesdits oxydes circulant entre ledit premier lit fluidisé circulant de conversion d'énergie (2, 20) et un second lit fluidisé circulant (3) formant un réacteur d'oxydation des oxydes, ledit réacteur de conversion énergétique (2, 20) et Ledit réacteur d'oxydation d'oxydes (3) étant interconnectés **caractérisé en ce qu'**il comprend une deuxième étape d'injection d'oxygène apporté à la sortie dudit réacteur (2, 20).

2. Procédé selon la revendication 1, **caractérisé en ce que** la conversion énergétique du combustible est une combustion.

3. Procédé selon la revendication précédente, **caractérisé en ce que** l'injection d'oxygène de la deuxième étape est faite dans un cyclone (5) de séparation gaz- solides dudit premier lit fluidisé (2).

4. Procédé selon la revendication précédente, **caractérisé en ce que** l'injection d'oxygène est faite dans la partie supérieure de la gaine (50) d'entrée dudit cyclone (5).

5. Procédé selon la revendication 3, **caractérisé en ce que** l'injection d'oxygène est faite dans le plafond (52) dudit cyclone (5).

6. Procédé selon la revendication 3, **caractérisé en ce que** l'injection d'oxygène est faite à la sortie (51) dudit cyclone (5).

7. Procédé selon la revendication 1 ou 2, **caractérisé en ce que** la conversion énergétique du combustible est une gazéification.

8. Procédé selon La revendication précédente, **caractérisé en ce que** ladite gazéification est effectuée selon un cycle thermochimique.

9. Procédé selon la revendication précédente, **caractérisé en ce que** L'injection d'oxygène de ladite deuxième étape est faite par le plafond (53) d'un réacteur cyclone à flux gazeux vertical descendant.

10. Procédé selon la revendication précédente, **caractérisé en ce que** l'injection d'oxygène est faite sensiblement au centre dudit réacteur cyclone à flux gazeux vertical descendant.

11. Procédé de conversion énergétique selon la revendication 1, **caractérisé en ce qu'**il comprend deux voies parallèles de réaction desdits combustibles dans ledit réacteur de conversion énergétique (2), dit premier réacteur de conversion énergétique, et un second réacteur de conversion énergétique (20) avec une deuxième étape d'injection d'oxygène à la sortie desdits réacteurs de conversion énergétique (2, 20) et que ledit réacteur d'oxydation d'oxydes (3) alimente simultanément et de façon contrôlée en particules d'oxydes métalliques ledit premier réacteur de conversion énergétique (2) et ledit second réacteur de conversion énergétique (20).

## Patentansprüche

1. Verfahren zur energetischen Umwandlung von festen Brennstoffen, die insbesondere Kohlenstoff enthalten, das einen ersten Schritt des Reagierenlassens der Brennstoffe in wenigstens einem Reaktor (2, 20) für energetische Umwandlung umfasst, wobei der erste Schritt in einer ersten zirkulierenden Wirbelschicht (2, 20) mit Metalloxiden für die Umwandlung des Brennstoffs erfolgt, wobei die Oxide zwischen der ersten zirkulierenden Wirbelschicht (2, 20) für die Energieumwandlung und einer zweiten zirkulierenden Wirbelschicht (3), die einen Oxidationsreaktor für Oxide bildet, zirkulieren, wobei der Reaktor (2, 20) für energetische Umwandlung und der Oxid-Oxidationsreaktor (3) miteinander verbunden sind, **dadurch gekennzeichnet, dass** es einen zweiten Schritt des Einleitens von Sauerstoff, der dem Ausgang des Reaktors (2, 20) zugeführt wird, umfasst.

2. Verfahren nach Anspruch 1, **dadurch gekennzeichnet, dass** die energetische Umwandlung von Brennstoffen eine Verbrennung ist.

3. Verfahren nach dem vorhergehenden Anspruch, **dadurch gekennzeichnet, dass** das Einleiten von Sauerstoff des zweiten Schrittes in einem Zyklon (5) für die Trennung von Gasen und Festkörpern der ersten Wirbelschicht (2) erfolgt.

4. Verfahren nach dem vorhergehenden Anspruch, **dadurch gekennzeichnet, dass** das Einleiten von Sauerstoff in einem oberen Teil des Eingangskanals (50) des Zyklons (5) erfolgt.

5. Verfahren nach Anspruch 3, **dadurch gekennzeichnet, dass** das Einleiten von Sauerstoff in den Boden (52) des Zyklons (5) erfolgt.

6. Verfahren nach Anspruch 3, **dadurch gekennzeichnet, dass** das Einleiten von Sauerstoff am Ausgang (51) des Zyklons (5) erfolgt.

7. Verfahren nach Anspruch 1 oder 2, **dadurch gekennzeichnet, dass** die energetische Umwandlung des Brennstoffs eine Vergasung ist.

8. Verfahren nach dem vorhergehenden Anspruch, **dadurch gekennzeichnet, dass** die Vergasung gemäß einem thermochemischen Zyklus ausgeführt wird.

9. Verfahren nach dem vorhergehenden Anspruch, **dadurch gekennzeichnet, dass** das Einleiten von Sauerstoff des zweiten Schrittes durch den Boden (53) eines Zyklonreaktors mit absteigendem vertikalen Gasstrom erfolgt.

10. Verfahren nach dem vorhergehenden Anspruch, **dadurch gekennzeichnet, dass** das Einleiten von Sauerstoff im Wesentlichen in der Mitte des Zyklonreaktors mit absteigendem vertikalem Gasstrom erfolgt.

11. Verfahren zur energetischen Umwandlung nach Anspruch 1, **dadurch gekennzeichnet, dass** es zwei parallele Reaktionswege für die Brennstoffe in dem Reaktor (2) für energetische Umwandlung, nämlich den ersten Reaktor für energetische Umwandlung und einen zweiten Reaktor (20) für energetische Umwandlung, umfasst, dass es einen zweiten Schritt des Einleitens von Sauerstoff in den Ausgang der Reaktoren (2, 20) für energetische Umwandlung umfasst und dass der Oxid-Oxidationsreaktor (3) gleichzeitig und auf gesteuerte Weise den ersten Reaktor (2) für energetische Umwandlung und den zweiten Reaktor (20) für energetische Umwandlung mit Metalloxid-Partikeln speist.

## Claims

1. Method of energy conversion of solid fuels containing in particular carbon, comprising a first step of reacting said fuels in at least one energy conversion reactor (2, 20), the reaction of said first step being effected in a first circulating fluidized bed (2, 20) with metal oxides for conversion of the fuel, said oxides circulating between said first circulating fluidized bed for energy conversion (2, 20) and a second circulating fluidized bed (3) forming an oxide oxidation reactor, said energy conversion reactor (2, 20) and said oxide oxidation reactor (3) being interconnected, **characterized in that** it comprises a second step of injecting oxygen at the exit from said reactor (2, 20).

2. Method according to Claim 1, **characterized in that** the energy conversion of the fuel is combustion.

3. Method according to the preceding claim, **characterized in that** the oxygen for the second step is injected into a gas-solid separation cyclone (5) of said first fluidized bed (2).

4. Method according to the preceding claim, **characterized in that** the oxygen is injected into the upper portion of the inlet duct (50) of said cyclone (5).

5. Method according to Claim 3, **characterized in that** the oxygen is injected into the roof (52) of said cyclone (5).

6. Method according to Claim 3, **characterized in that** the oxygen is injected at the exit (51) of said cyclone (5).

7. Method according to Claim 1 or 2, **characterized in that** the energy conversion of the fuel is gasification.

8. Method according to the preceding claim, **characterized in that** said gasification is effected according to a thermochemical cycle.

9. Method according to the preceding claim, **characterized in that** the oxygen for said second step is injected through the roof (53) of a downward vertical gas flow cyclone reactor.

10. Method according to the preceding claim, **characterized in that** the oxygen is injected substantially at the center of said downward vertical gas flow cyclone reactor.

11. Energy conversion according to Claim 1, **characterized in that** it comprises two parallel channels for reacting said fuels in said energy conversion reactor (2), referred to as first energy conversion reactor, and a second energy conversion reactor (20) with a second step of injecting oxygen at the exit of said energy conversion reactors (2, 20), and that said oxide oxidation reactor (3) feeds said first energy conversion reactor (2) and said second energy conversion reactor (20) with particles of metal oxides simultaneously and in a controlled manner.
